# EUROPEAN PATENT SPECIFICATION

(11) **EP 1 506 927 B1**
(45) Date of publication and mention of the grant of the patent: **30.09.2009**
(21) Application number: 03029585.1
(22) Date of filing: 22.12.2003
(51) Int. Cl.: B65D 81/26, B32B 5/32, B32B 37/00

(54) **Process for manufacturing a vessel made of foamed material for packaging foodstuffs**
Verfahren zum Produzieren ein Behälter aus geschäumtem Material zum Verpacken von Nahrungsmitteln
Procédé pour la fabrication d'un récipient en matériau expansé pour emballer des produits alimentaires

(30) Priority: 12.08.2003 IT TO20030634
(43) Date of publication of application: 16.02.2005
(73) Proprietor: MAGIC PACK S.R.L., 26030 Gadesco Pieve Delmona (CR) (IT)
(72) Inventor: Florio, Biasio, 26030 Gadesco Pieve Delmona (CR) (IT)
(74) Representative: Garavelli, Paolo

(56) References cited:
- EP-A- 0 520 509
- EP-A- 1 238 795
- DE-U- 9 206 407
- DE-U- 29 723 954
- US-A- 3 610 509
- US-A- 6 103 163
- US-E- R E33 143

## Description

The present invention refers to a process for manufacturing a vessel made of foamed material for packaging foodstuffs, particularly for containing foods that tend to leak excess liquids.

The problem of packaging foods that leak liquids, such as for example meat or fish, has been dealt with for 40 years, with various types of more or less functional arrangements. Currently, in order to package the above foods, a very widely spread system is using a containing tray made of foamed material around which a film made of extensible plastics is wound. In this type of packaging, the liquid leaked by foods is a big problem both for food industry operators and for big distribution operators, and for the end user, since the excessive presence of liquids in a vessel drastically reduces the product life, in addition, obviously, to strongly negatively affect its visual impact. The excessive liquid, moreover, migrates on the whole tray and on the extensible film used for packaging it, thereby creating further handling and transport problems. Moreover, since these are disposable vessels, characterised by high rotation volumes, the cost of the vessel itself is fundamental, such cost having to be as low as possible, or at least proportional in percentage with the packaged food.

Currently, some types of vessels are known that are able to absorb liquids and their most meaningful solutions will be briefly described herein below.

An arrangement is known from the prior art that has been realised by joining, by means of a coupler with hot-air blowers, two closed-cell polystyrene sheets inside which there are bands of absorbing material made of paper or of unwoven fabric and following drawing: however, the use of different mutually-mixed materials for manufacturing the tray creates serious problems upon recycling the vessel itself. Moreover, the absorption capability is linked to the absorbing band size that in many cases is not able to absorb the whole liquid leaked by foods, especially as regards red meat. Since two vessel sides has, next to the absorbent length, a separation between lower sheet and upper sheet, if such tray is slanted or if the amount of liquid is greater than the absorbent band capacity, the liquid leaks out of the vessel itself.

Another solution is known in the art, that is realised by making the open-cell foam polystyrene sheet with a polystyrene film on the upper side of the open-cell foam polystyrene sheet and a film, always made of polystyrene, on its lower side, and by subjecting them to a following drawing. It is however necessary to remember that the open-cell foam polystyrene sheet has a small mechanical strength and is very easily broken down or squashed; therefore, a high thickness is necessary in order to have enough strength and elasticity, but also in this case a light pressure on its surface, especially on the corners, generates a irreversible vessel distortion. The films on the two surfaces makes the vessel sturdier but they do not always completely solve the problem. Also as regards the visual barrier to absorbed liquids, there are several problems: in fact, in many cases, the above liquids leave a quite visible stain, even if the surface films, with additives made of covering substances, reduce their vision enough. Moreover the drawing system and process for manufacturing these trays are particularly complex and difficult to manage.

Finally, a solution is known in the art that operates by coupling two closed-cell foam polystyrene sheets with, inside them, an open-cell polystyrene sheet, and following drawing. The three sheets are coupled by using a jet of hot air at approximately 350° - 450° that melts the two external sheets; during the passage through the rolling cylinders nip, the melted material is joined to the layer of open-cell polystyrene through compression; during this working step, however, the sheet cellular structure, in particular the open-cell one, is subjected to a high squashing that unavoidably reduces its absorption capability. The hot-air coupling operation is per se a critical and not easily manageable process, since a non-optimal air temperature can bring about, if too low, a scarce adhesion of the three layers with therefore a chance of detachment, or, if too high, a breakage of the external layers. The risk of fire, moreover, is high, because the two sheets of open-cell and closed-cell foam polystyrene contain part of the gas used for expansion, that, as known, is highly flammable, above all if subjected to strong heating like in this case. For manufacturing a sheet made of open-cell foam polystyrene when extruding, polymers foreign to polystyrene and that cannot be mixed with this latter one, are added to the basic raw materials; in this case however the extrusion process is less stable and more difficult to be managed. Also in the drawing step, if the forming device with upper die and lower die is not suitably shaped, the lower die pressure action on the sheet creates a further layer squashing, in particular the internal open-cell layer, such action further reducing its absorption capability.

US-A-3,610,509 discloses a skin-coated article formed of foamed thermoplastic material.
US-A-6,103,163 discloses processes and apparatuses for perforating smooth, closed-cell surfaces of open-cell, plastic foam sheets.

Object of the present invention is solving the above prior-art problems by providing a vessel for packaging foodstuff made of foamed material that, being in compliance with standards in force related to food contact suitability, is able to guarantee the absorption of liquids leaked from foods contained therein from three to five times its weight, in addition to guarantee the absorbed liquid seal not allowing it to leak, in particular when the vessel is handled or put in a vertical or slanted position.

A further object of the present invention is providing a vessel for packaging foodstuff made of foamed material that is sturdy enough to support, without being broken or excessively distorted, the stresses during the packaging step, above all in automated lines, and moreover manufactured with a single material and therefore above to be easily recycled.

A further object of the present invention is providing a vessel for packaging foodstuffs made of foamed material that is able to provide an enough visual barrier to the serum leaked from foods contained therein, particularly from red meat.

Finally, another object of the present invention is providing a vessel for packaging foodstuffs made of foamed material that is able to allow its manufacture in an inexpensive way, in order to guarantee to the end product a competitive sales price and a sufficient operative margin.

The above and other objects and advantages of the invention, as will appear from the following description, are obtained by a process for manufacturing a vessel for packaging foodstuffs made of foamed material as claimed in Claim 1.

Preferred embodiments and non-trivial variations of the present invention are claimed in the dependent Claims.

The present invention will be better described by some preferred embodiments thereof, given as a nonlimiting example, with reference to the enclosed drawings, in which:
- FIG. 1 is a top perspective view of an embodiment of the vessel made of foamed material for packaging foodstuffs according to the process of the present invention;
- FIG. 2 is a sectional view along the dashed line A-A shown in FIG. 1 of the vessel made of foamed material for packaging foodstuffs according to the process of the present invention;
- FIG. 3 shows an enlarged sectional view of the part shown by the dashed box Q in FIG. 2 of the vessel made of foamed material for packaging foodstuffs according to the process of the present invention; and

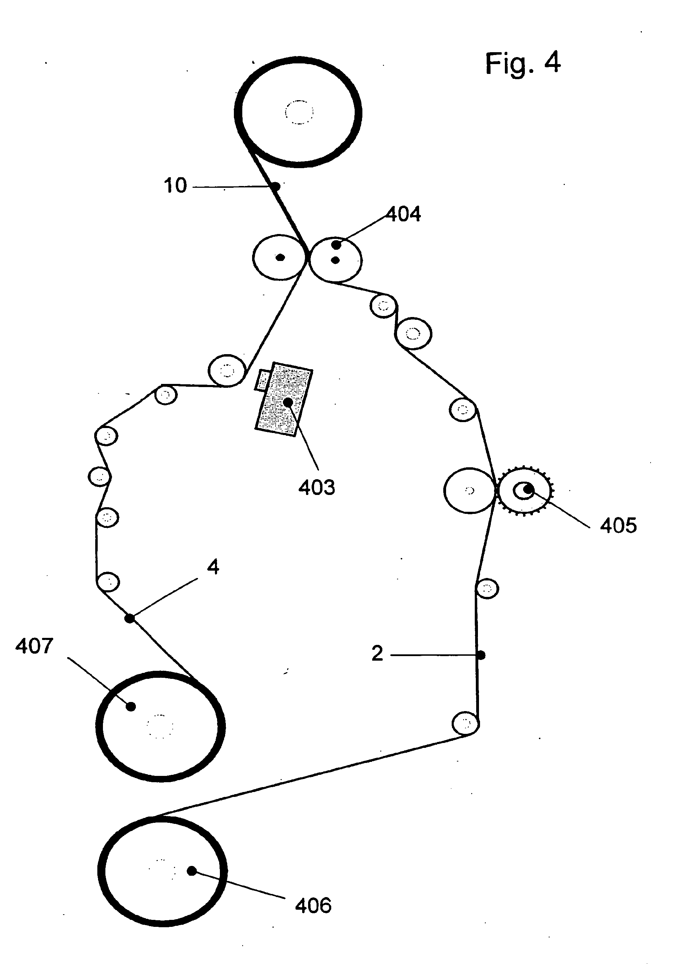

- FIG. 4 shows a diagram of the production process of the vessel made of foamed material for packaging foodstuffs according to the process of the present invention.

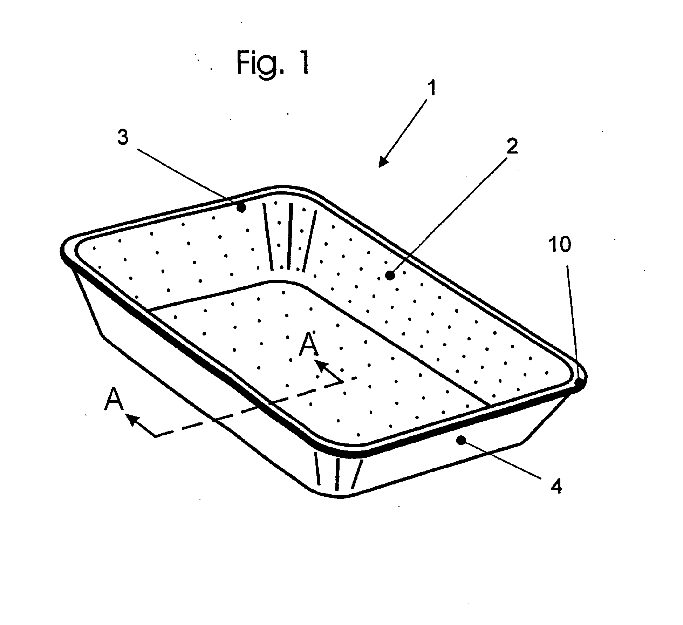

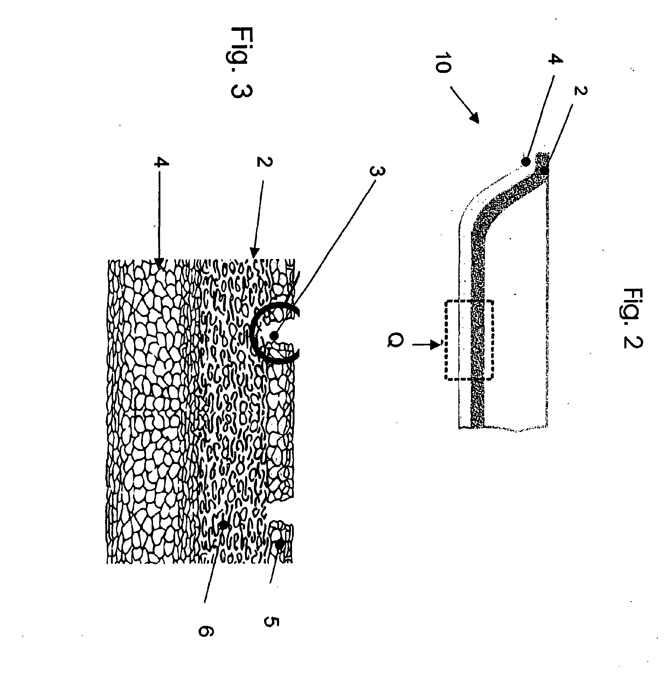

With reference to FIG. 1 and 2, a vessel 1 made of foamed material for packaging foodstuffs can be noted, that is able to absorb excessive liquids leaked from foods themselves contained therein, that is composed of a two-layer sheet 10 formed by an upper sheet 2 made of open-cell and closed-cell foam polystyrene overlapping a lower sheet 4 made of closed-cell foam polystyrene.

As can be noted from FIG. 3, the upper sheet 2 is equipped with two particular and different cellular structures: the sheet 2 in fact has a surface layer 5, aimed to get in contact with the food, that has a closed-cell structure and an absorbing layer 6 that has an open-cell structure. The surface layer 5 is further equipped with a plurality of holes 3. Such particular arrangement of the upper sheet 2 allows the liquid leaked from foods contained in the vessel 1 to flow through the upper layer 2 by means of the holes 3 and be absorbed by the absorbing layer 6 due to its own open-cell structure.

The lower closed-cell sheet 4, in addition to perform the role of carrier structure for the vessel 1, is a barrier that liquids cannot pass and an optimum visual screen that does not allow seen the serum accumulated onto the absorbing layer 6.

Moreover, the sheet 4, together with the sheet 2 with which it is integral, allows obtaining a sturdy vessel that is able to resist to following filming processes (not shown).

The structure above thereby allows obtaining several results:
1) absorption of liquids leaked from foods contained in the vessel 1;
2) optical separation of the absorbing layer 6 aimed for absorbing the liquids;
3) stiffening the vessel 1;
4) a better strength to local material squashing.

Therefore, by using a single upper sheet 2 resulting from a single extrusion process (not shown), the effect and the behaviour of a coupled sheet of the prior art are obtained, where the upper part is made of closed-cell foam polystyrene and the lower part is made of open-cell foam polystyrene, in order to obtain which, however, two distinct extrusion processes are necessary (one for realising the closed-cell layer, the other for realising the open-cell layer) associated with a coupling process to join the two layers.

The above-described vessel 1 is manufactured through a production process according to the invention that comprises the steps of:
- realising through extruding, cutting and winding means (not shown) a band of material for the lower sheet 4;
- realising through extruding, cutting and winding means (not shown) a band of material for the upper sheet 2, in which such band for the upper sheet 2 has the same width of the band for the lower sheet 4;
- drilling the surface layer 5 of the band of material for the upper sheet 2 through drilling means 405; and, in an innovative way
- arranging a layer of glue by means of glue-laying means 403 onto the band of material for the lower sheet 4;
- joining a band of material for the upper sheet 2 and the band of material for the lower sheet 4 through coupling means 404 in order to make the two-layer sheet 10; and
- thermoforming through drawing means (not shown) the vessels 1 from the two-layer sheet 10.

In particular, the step of making a band of material for the lower sheet 4 made of closed-cell foam polystyrene provides that a mixture having, for 100 parts in weight, the following composition, which is not part of the invention:
- 50% to 80% of 1^{st}-use polystyrene;
- 20% to 50% of regenerated polystyrene;
- 0.3% to 0.6% of an expanding and nucleating agent based on citric acid and sodium bicarbonate; and
- 0.8% to 1.5% of a nucleating agent based on talc, is melted in a single-screw extruder of the tandem type at a temperature of about 220 °C; after having reached its melting, a bulging agent is injected into the liquid mass, preferably from 3% to 6% of a mixture of butane, isobutane and propane gases; afterwards the fluid is passed into the secondary extruder that, always through a suitable mixing, starts a gradual cooling till its end part, the die plate. In this phase the material that went out of the extruder body through its hear, that has a circular shape, is completely expanded: the thereby-obtained tube of foamed material has a diameter from 15 to 20 cm and a temperature between 125 °C and 135 °C; afterwards, the tube of foamed material is inserted onto a suitable (calibrating) cylinder with adequate sizes, due to which it is possible to give it the desired diameter. At the end of the calibrator two blades are laterally placed that perform the sectioning of the tube made of foamed material: from this point on, the extruded material gets the shape of two sheets. These sheets are taken by a roller (dragging) system that pulls the material towards the winding device, that will transform the two sheets into circular coils 407. In order to calibrate the material expansion, the material is immediately cooled on its upper surface by means of an air ring placed at the extruder head outlet and through an air ring of bigger sizes placed around the calibrator. This latter one, instead, being a water-cooled cylinder, is responsible for the internal cooling of the material sliding in direct contact with the cylinder surface. The foamed sheet made of closed-cell foam polystyrene will have, at the end of this step, a thickness included between 1 and 3 mm and a density included between 50 and 150 kg/m³. The vessel 1 will have a basic weight included between 240 and 400 g/m².

In particular, the step of making a layer of material for the upper sheet 2 made of open-cell and closed-cell polystyrene provides a mixture having, for 100 parts in weight, the following composition, which is not part of the invention:
- 70% to 100% of 1^{st}-use polystyrene;
- 10% to 20% of regenerated polystyrene from a sheet of open-cell and closed-cell foam polystyrene;
- 0.8% to 1.8% of a nucleating agent based on talc; and
- 1% to 4% of an antistatic agent,
is melted in a single-screw extruder of the tandem type at a temperature of about 220 °C; after having reached its melting, a bulging agent is injected into the liquid mass, preferably from 3% to 6% of a mixture of butane, isobutane and propane gases; afterwards the fluid is passed into the secondary extruder that, always through a suitable mixing, starts a gradual cooling till its end part, the die plate. In this phase the material that went out of the extruder body through its hear, that has a circular shape, is completely expanded: the thereby-obtained tube of foamed material has a diameter from 15 to 20 cm; afterwards, the tube of foamed material is inserted onto a suitable (calibrating) cylinder with adequate sizes, due to which it is possible to give it the desired diameter. At the end of the calibrator two blades are laterally placed that perform the sectioning of the tube made of foamed material: from this point on, the extruded material gets the shape of two sheets. These sheets are taken by a roller (dragging) system that pulls the material towards the winding device, that will transform the two sheets into circular coils 406. In order to form the surface layer 5, the material is immediately cooled on its upper part through an air ring placed at the extruder head outlet and through an air ring of bigger sizes placed around the calibrator. Inside this latter one, there is a forced cooling system that is able to convey inside the calibrator high amounts of cold air that is able to form the closed-cell surface layer, such air having to go out of suitable calibrator openings, or be sucked by a suitable pump. By suitable adjusting the air amount and temperature, the amount of surface closed cells can be determined and thereby the surface layer 5 thickness. The obtained upper sheet 2 made of open-cell and closed-cell foam polystyrene will have, at the end of this step, a thickness included between 1 and 3 mm and a density included between 50 and 150 kg/m³.

In particular, the step of drilling the surface layer 5 of the band of material for the upper sheet 2 made of open-cell and closed-cell polystyrene provides that a plurality of holes 3 are applied on the whole surface layer 5 and the above drilling means comprise a needle cylinder 405 with related counter-cylinder. Purpose of the obtained holes 3 is breaking the surface layer 5 to allow the liquids leaked from foods contained inside the vessel 1 to reach the absorbing layer 6.

In particular, the step of arranging a layer of glue by means of glue laying means 403 onto the band of material for the lower sheet 4 provides that such means 403 comprise a suitable device aimed for laying the melted glue according to a spider-web arrangement onto the sheet 4 made of closed-cell foam polystyrene.

In particular, the step of joining the band of material for the upper sheet 2 with the band of material for the lower sheet 4 through coupling means 404 in order to make the two-layer sheet 10 provides that the above means 404 comprise at least two calendering cylinders through which sheet 2 and sheet 4 pass and that due to a very light pressure applied to the above rollers, the two above sheets remain mutually glued forming the two-layer sheet 10.

In particular, the step of thermoforming the vessels 1 from the two-layer sheet 10 through drawing means provides that such drawing means comprise an upper die with a plurality of impressions and related lower dies. During the step of thermoforming, namely the closure of the upper die and its lower die, after softening of the sheet coupled due to heating, a vacuum is generated inside the die and by vacuum the two-layer sheet 10 adheres to the die walls assuming its final shape. Lower die height and shape must be such as to perfectly close the upper die for creating vacuum inside it.

In view of what has been described above, the manufacture deriving from the production process according to the present invention appears readily simplified. The extrusion process to make the supper sheet 2, differently from what has been proposed by the prior art, does not provide for the addition of polymers foreign to polystyrene, but only the use of suitable process temperatures and pressures. Moreover, through a suitable management of the extrusion process, it is possible to obtain, in the upper sheet 3, a suitable combination between open and closed cells, depending on the necessary absorption capability and the degree of required strength of the sheet itself. Coupling between upper sheet 2 and lower sheet 4 occurs by gluing, without using heat, and with small calendering pressures. There are several advantages by using this process:
- the upper sheet 2 keeps its thickness, and therefore its absorption power, approximately unchanged;
- the chance of using open-cell foam polystyrene scraps, after re-densifying, for producing a new sheet made of foam polystyrene, such thing, in case of addition of polymers foreign to polystyrene, as taught by the prior art, being impossible;
- the gluing process check is more accurate and much quicker than the prior-art heat coupling, since it is driven by a sophisticated spider-web glue distribution apparatus, that moreover is perfectly compatible with the internal recycling and re-densifying process; moreover, the principle of coupling through heat is based on materials melting and pressing, that, in addition to reduce their thickness, heavily slows the coupling time itself, since the coupling time is affected by the necessary time for the material to melt; the glue-based system instead allows obtaining production speeds that are 10 - 20 times greater than the heat coupling system ones;
- drilling is simplified since in the prior art the drilling means must completely pass the first sheet and partly drill the below absorbing layer, while in the process of the present invention, the drilling means 405 must partially drill the surface layer 5 only, providing an advantage for accuracy and production speed;
- the lower dies of the present invention give a contribution to the correct forming of vessels 1 without however squashing the sheet 10, thereby keeping its absorption capacity approximately unchanged. Moreover, the plastic distortion action by vacuum is in this case made easier with respect to the prior art since it must act on a two-layer sheet 10 and not a three-layer one like in the known processes, all as an advantage for vessel 1 quality and production efficiency.

## Claims

1. Process for manufacturing a vessel (1) for packaging foodstuffs made of a sheet (10) of a two-layer foamed material, said sheet (10) comprising a lower support sheet (4) made of closed-cell foamed polystyrene, and an upper sheet (2) made of open-cell and closed-cell foam polystyrene, said sheet (2) comprising a surface layer (5) adapted to get in contact with foodstuff contained in said vessel (1) and having a closed-cell structure, and an absorbing layer (6) having an open-cell structure, said surface layer (5) being equipped with a plurality of holes (3) adapted to allow a liquid leaked from said foodstuffs to penetrate into said surface layer (3) and be absorbed by said absorbing layer (6),
said process comprising the steps of:
- realising, through extruding, cutting and winding means, a band of material for said lower sheet (4), said extruding means comprising a single-screw extruder of the tandem type equipped with an air ring placed at the head outlet, said cutting means comprising an air-cooled calibrator equipped with a cooling air ring, said step of realising said band of material for said lower sheet (4) comprising the sub-steps of:
• forming a tube of closed-cell foamed polystyrene whose diameter is included between 15 and 20 cm and whose temperature is included between 125 °C and 135 °C;
• cooling said tube through said air ring placed at the head outlet of said extruder;
• placing said tube on said calibrator;
• cooling said tube through said cooling air ring of said calibrator and said cooling water of said calibrator;
• cutting said tube through said blades placed laterally to said calibrator forming two of said bands for said lower sheet (4); and
• winding said bands for said lower sheet (4) through said roller system that supplies said band for said lower sheet (4) to said winding device that forms circular coils (407);
- realising, through extruding, cutting and winding means, a band of material for said upper sheet (2), such band for said upper sheet (2) having the same width of said band for said lower sheet (4), said extruding means comprising a single-screw extruder of the tandem type equipped with an air ring placed at the head outlet, said cutting means comprising said air-cooled calibrator equipped with the cooling air ring, said step of realising said band of material for said upper sheet (2) comprising the sub-steps of:
• forming a tube of made of open-cell and closed-cell foam polystyrene whose diameter is included between 15 and 20 cm;
• cooling said tube through said air ring placed at the head outlet of said extruder;
• placing said tube on said calibrator;
• cooling said tube through said cooling air ring of said calibrator and through said forced air cooling system inside said calibrator;
• cutting said tube through said blades placed laterally to said calibrator forming two of said bands for said upper sheet (2); and
• winding said bands for said upper sheet (2) through said roller system that supplies said band for said upper sheet (2) to said winding device that forms circular coils (406);
- drilling said surface layer (5) of said band of material for said upper sheet (2) through drilling means (405);
- arranging a layer of glue by means of glue laying means (403) onto said band of material for said lower sheet (4);
- joining said band of material for said upper sheet (2) with said band of material for said lower sheet (4) through coupling means (404) in order to make a band for the two-layer sheet (10); and
- thermoforming through drawing means said vessels (1) from said two-layer sheet (10).

2. Process according to claim 1, **characterised in that** said winding means comprise a winding device and a roller system.

3. Process according to claim 1, **characterised in that** said cutting means for realising a band of material for said lower sheet (4) comprise at least two blades placed on sides of said calibrator.

4. Process according to claim 1, **characterised in that** said cutting means for realising a band of material for said upper sheet (2) comprise at least two blades placed on sides of said calibrator.

5. Process according to claim 1, **characterised in that** said drilling means comprise a needle cylinder (405) and its related counter-roller.

6. Process according to claim 1, **characterised in that** said glue laying means (403) comprise a device aimed for laying the melted glue according to a spider-web arrangement.

7. Process according to claim 1, **characterised in that** said coupling means (404) comprise at least two calendering cylinders.

8. Process according to claim 1, **characterised in that** said drawing means comprise an upper die containing a plurality of impressions and a related lower die.

9. Process according to claim 1, **characterised in that** said band for said upper sheet (2) is unwound from said circular coil (406) and is supplied to said drilling means through a roller system.

10. Process according to claim 1, **characterised in that** said band for said lower sheet (4) is unwound from said circular coil (407) and is supplied to said glue-laying means (403) through a roller system.

11. Process according to claim 1, **characterised in that** said band for said upper sheet (2) is supplied from said drilling means (405) to said coupling means (404) through a roller system.

12. Process according to claim 1, **characterised in that** said band for said lower sheet (4) is supplied from said glue-laying means (403) to said coupling means (404) through a roller system.

13. Process according to claim 1, **characterised in that** said band for said two-layer sheet (10) is supplied from said coupling means (404) to said thermoforming means through a roller system.

14. Process according to claims 1, **characterised in that** said step of thermoforming comprises the steps of:
- heating said two-layer sheet (10);
- inserting said two-layer sheet (10) heated in said upper die and closing said related lower die;
- creating vacuum inside said upper die closed by said lower die;
- opening said upper die and removing said vessel (1).

## Patentansprüche

1. Verfahren für die Herstellung eines Behälters (1) zur Verpackung von Nahrungsmitteln aus einer Folie (10) aus doppelschichtigem Schaumstoff (1); die genannte Folie (10) schließt eine untere Stützfolie (4) aus geschlossenzelligem Schaumpolystyrol und eine obere Folie (2) aus offen- und geschlossenzelligem Schaumpolystyrol ein, die genannte Folie (2) enthält eine Oberflächenschicht (5), die dazu dient, mit einem in dem genannten Behälter (1) enthaltenen Nahrungsmittel in Kontakt zu kommen und hat eine geschlossene Zellstruktur, sowie eine Absorptionsschicht (6) mit einer offenen Zellstruktur, die genannte Oberflächenschicht (5) ist mit mehreren Löchern (3) ausgestattet, die dazu dienen zuzulassen, dass eine durch die genannten Nahrungsmittel ausgegebene Flüssigkeit in die genannte Oberflächenschicht (3) eindringt und durch die genannte Absorptionsschicht (6) absorbiert wird,
das genannte Verfahren schließt folgende Phasen ein:
- Realisierung eines Materialbandes durch Extruder-, Schnitt- und Aufrollvorrichtungen für die genannte untere Folie (4), die genannten Extruder schließen einen Einschnecken-Tandem-Extruder ein, der mit einem Luftring ausgestattet und am Kopfausgang positioniert ist, die genannten Schnittvorrichtungen schließen eine luftgekühlten Kalibrierdorn ein, der mit einem Kühlluftring ausgestattet ist, die genannte Phase für die Realisierung des genannten Materialbandes für die genannte untere Folie (4) schließt folgende Unterphasen ein:
• Bildung eines Rohres aus geschlossenzelligem Schaumpolystyrol, dessen Durchmesser zwischen 15 und 20 cm und dessen Temperatur zwischen 125°C und 135°C liegt;
• Kühlung des genannten Rohres durch den genannten Luftring, der am Ausgang des Kopfes des genannten Extruders positioniert ist;
• Positionierung des genannten Rohres auf dem genannten Kalibrierdorn;
• Kühlung des genannten Rohres durch den genannten Kühlluftring des genannten Kalibrierdorns und das genannte Kühlwasser des genannten Kalibrierdorns;
• Schnitt des genannten Rohres durch die genannten Sägeblätter, die seitlich am genannten Kalibrierdorn positioniert sind und die zwei genannten Bänder für die genannte untere Folie (4) bilden; und
• Aufrollen der genannten Bänder für die genannte untere Folie (4) mit dem genannten Walzensystem, das das genannte Band für die genannte untere Folie (4) zum genannten Aufroller führt, der kreisförmige Spulen (407) bildet;
- Realisierung eines Materialbandes durch Extruder-, Schnitt- und Aufrollvorrichtungen für die genannte obere Folie (2), ein solches Band für die genannte obere Folie (2) hat die gleiche Breite wie das genannte Band für die genannte untere Folie (4), die genannten Extruder schließen einen Einschnecken-Tandem-Extruder ein, der mit einem Luftring ausgestattet und am Kopfausgang positioniert ist, die genannten Schnittvorrichtungen schließen einen luftgekühlten Kalibrierdorn ein, der mit einem Kühlluftring ausgestattet ist, die genannte Phase für die Realisierung des genannten Materialbandes für die genannte obere Folie (2) schließt folgende Unterphasen ein:
• Bildung eines Rohres aus offen- und geschlossenzelligem Schaumpolystyrol, dessen Durchmesser zwischen 15 und 20 cm liegt;
• Kühlung des genannten Rohres durch den genannten Luftring, der am Ausgang des Kopfes des genannten Extruders positioniert ist;
• Positionierung des genannten Rohres auf dem genannten Kalibrierdorn;
• Kühlung des genannten Rohres durch den genannten Kühlluftring des genannten Kalibrierdorns und durch das genannte, im genannten Kalibrierdorn forcierte Luftkühlsystem;
• Schnitt des genannten Rohres durch Sägeblätter, die seitlich am genannten Kalibrierdorn positioniert sind und die zwei genannten Bänder für die genannte obere Folie (2) bilden; und
• Aufrollen der genannten Bänder für die genannte obere Folie (2) mit dem genannten Walzensystem, das das genannte Band für die genannte obere Folie (2) zum genannten Aufroller führt, der kreisförmige Spulen (406) bildet;
- Lochung der genannten Oberflächenschicht (2) des genannten Materialbandes für die genannte obere Folie (2) durch Lochungsvorrichtungen (405);
- Auftragen eines Klebschicht durch Vorrichtungen zum Auftragen von Klebe (403) auf das genannte Materialband für die genannte untere Folie (4);
- Vereinigung des genannten Materialbandes der genannten oberen Folie (2) mit dem genannten Materialband für die genannte untere Folie (4) durch Verbindungsvorrichtungen (404) für die Bildung eines Bandes für die doppelschichtige Folie (10); und
- Thermoformen durch Füllungsvorrichtungen der genannten Behälter (1) der genannten doppelschichtigen Folie (10).

2. Verfahren gemäß Patentanspruch 1, das **dadurch gekennzeichnet ist, dass** die genannten Aufrollvorrichtungen einen Aufroller und ein Walzensystem einschließen.

3. Verfahren gemäß Patentanspruch 1, das **dadurch gekennzeichnet ist, dass** die genannten Schnittvorrichtungen für die Realisierung eines Materialbandes für die genannte untere Folie (4) mindestens zwei Sägeblätter, die an den Seiten des genannten Kalibrierdorns angebracht sind, einschließen.

4. Verfahren gemäß Patentanspruch 1, das **dadurch gekennzeichnet ist, dass** die genannten Schnittvorrichtungen für die Realisierung eines Materialbandes für die genannte obere Folie (2) mindestens zwei Sägeblätter, die an den Seiten des genannten Kalibrierdorns angebracht sind, einschließen.

5. Verfahren gemäß Patentanspruch 1, das **dadurch gekennzeichnet ist, dass** die genannten Lochungsvorrichtungen einen Nadelzylinder (405) und seine entsprechende Gegenwalze einschließen.

6. Verfahren gemäß Patentanspruch 1, das **dadurch gekennzeichnet ist, dass** die genannten Vorrichtungen zum Auftragen der Klebe (403) eine Vorrichtung einschließen, die für das Auftragen von flüssiger Klebe in Spinnennetzanordnung bestimmt ist.

7. Verfahren gemäß Patentanspruch 1, das **dadurch gekennzeichnet ist, dass** die genannten Verbindungsvorrichtungen (404) mindestens zwei Kalandrierzylinder einschließen.

8. Verfahren gemäß Patentanspruch 1, das **dadurch gekennzeichnet ist, dass** die genannten Füllungsvorrichtungen ein oberes Gesenk einschließen, das mehrere Formräume und ein entsprechendes unteres Gegengesenk enthält.

9. Verfahren gemäß Patentanspruch 1, das **dadurch gekennzeichnet ist, dass** das genannte Band für die genannte obere Folie (2) von der genannten kreisförmigen Spule (406) abgerollt wird und den genannten Lochungsvorrichtungen durch ein Walzensystem zugeführt wird.

10. Verfahren gemäß Patentanspruch 1, das **dadurch gekennzeichnet ist, dass** das genannte Band für die genannte untere Folie (4) von der genannten kreisförmigen Spule (407) abgerollt wird und den genannten Vorrichtungen zum Auftragen der Klebe (403) durch ein Walzensystem zugeführt wird.

11. Verfahren gemäß Patentanspruch 1, das **dadurch gekennzeichnet ist, dass** das genannte Band für die genannte obere Folie (2) den genannten Verbindungsvorrichtungen (404) durch die genannten Lochungsvorrichtungen (405) mit Hilfe eines Walzensystems zugeführt wird.

12. Verfahren gemäß Patentanspruch 1, das **dadurch gekennzeichnet ist, dass** das genannte Band für die genannte untere Folie (4) den genannten Verbindungsvorrichtungen (404) durch die genannten Vorrichtungen zum Auftragen der Klebe (403) mit Hilfe eines Walzensystems zugeführt wird.

13. Verfahren gemäß Patentanspruch 1, das **dadurch gekennzeichnet ist, dass** das genannte Band für doppelschichtige Folien (10) den genannten Thermoformvorrichtungen mit Hilfe eines Walzensystems durch die genannten Verbindungsvorrichtungen (404) zugeführt wird.

14. Verfahren gemäß Patentanspruch 1, das **dadurch gekennzeichnet ist, dass** die genannte Thermoformphase folgende Phasen einschließt:
- Erhitzung der genannten doppelschichtigen Folie (10);
- Einführung der genannten erhitzten doppelschichtigen Folie (10) in das genannte obere Gesenk und Schließen des genannten entsprechenden unteren Gegengesenks;
- Erzeugung eines Vakuums im genannten oberen Gesenk, das durch das genannte untere Gesenk geschlossen wird;
- Öffnung des genannten oberen Gesenks und Auszug des genannten Behälters (1).

## Revendications

1. Méthode pour produire un conteneur (1) pour le conditionnement d'aliments, formé d'une feuille mince (10) de matière expansée double couche (1), ladite feuille mince (10) comprenant une feuille inférieure de support (4) en polystyrène expansé à cellules closes, et une feuille supérieure (2) en polystyrène expansé à cellules closes, ladite feuille mince (2) comprenant une couche de surface (5) à structure à cellules closes, qui peut entrer en contact avec un aliment contenu dans ledit conteneur (1) et une couche absorbante (6) à structure à cellules ouvertes, ladite couche de surface (5) étant pourvue d'une pluralité d'orifices (3) capables de permettre à tout liquide produit par lesdits aliments de pénétrer dans ladite couche de surface (3) et d'y être absorbé par ladite couche absorbante (6),
ladite méthode comprenant les étapes suivantes:
- réalisation, avec des moyens d'extrusion, de coupe et d'enroulement, d'un ruban de matière pour ladite feuille mince inférieure (4), lesdits moyens d'extrusion comprenant une extrudeuse monovis du type tandem munie d'une bague à air positionnée à la sortie de la tête, lesdits moyens de coupe comprenant un calibreur refroidi à l'air et pourvu d'une bague à air de refroidissement, ladite étape de réalisation dudit ruban de matière pour ladite feuille mince inférieure (4) comprenant les sous étapes suivantes:
• formation d'un tubulaire de polystyrène expansé à cellules closes avec un diamètre compris entre 15 et 20 cm et une température comprise entre 125°C et 135°C;
• refroidissement dudit tubulaire au moyen de la bague à air positionnée à la sortie de la tête de ladite extrudeuse;
• positionnement dudit tubulaire sur le calibreur;
• refroidissement dudit tubulaire au moyen de ladite bague à air de refroidissement du calibreur et de l'eau de refroidissement du calibreur;
• coupe du tubulaire au moyen de lames positionnées de part et d'autre du calibreur en formant deux desdits rubans pour ladite feuille mince inférieure (4); et
• enroulement desdits rubans pour ladite feuille mince inférieure (4) au moyen d'un système de rouleaux qui alimentent ledit ruban pour ladite feuille mince inférieure (4) à l'enrouleur qui forme des bobines circulaires (407);
- réalisation, à travers les moyens d'extrusion, de coupe et d'enroulement, d'un ruban de matière pour ladite feuille supérieure (2), le ruban pour ladite feuille supérieure (2) étant de même largeur que le ruban pour ladite feuille inférieure (4), lesdits moyens d'extrusion comprenant une extrudeuse monovis du type tandem munie d'une bague à air positionnée à la sortie de la tête, lesdits moyens de coupe comprenant un calibreur refroidi à l'air et muni d'une bague à air de refroidissement, ladite étape de réalisation dudit ruban de matériau pour ladite feuille supérieure (2) comprenant les sous étapes suivantes:
• formation d'un tubulaire de polystyrène expansé à cellules ouvertes et à cellules closes avec un diamètre compris entre 15 et 20 cm;
• refroidissement dudit tubulaire au moyen de ladite bague à air positionnée à la sortie de la tête de ladite extrudeuse;
• positionnement dudit tubulaire sur le calibreur;
• refroidissement dudit tubulaire au moyen de ladite bague à air de refroidissement dudit calibreur et à travers ledit système de refroidissement à air pulsé à l'intérieur du calibreur;
• coupe du tubulaire au moyen de lames positionnées de part et d'autre du calibreur en formant deux desdits rubans pour ladite feuille supérieure (2); et
• enroulement desdits rubans pour ladite feuille supérieure (2) au moyen d'un système de rouleaux qui alimente ledit ruban pour feuille lamina supérieure (2) à l'enrouleur qui forme des bobines circulaires (406);
- perçage de ladite couche de surface (5) dudit ruban de matière pour ladite feuille supérieure (2) à l'aide de moyens de perçage (405);
- étalement d'une couche de colle par l'intermédiaire de moyens d'étalement de la colle (403) sur ledit ruban de matière pour ladite feuille inférieure (4);
- union dudit ruban de matière pour ladite feuille supérieure (2) avec ledit ruban de matière pour ladite feuille inférieure (4) à l'aide de moyens d'accouplement (404) pour former un ruban pour la feuille à double couche (10); et
- formage à chaud, avec des moyens d'emboutissage desdits conteneurs (1) de ladite feuille à double couche (10).

2. Méthode selon la revendication 1, **caractérisée en ce que** lesdits moyens d'enroulement comprennent un enrouleur et un système de rouleaux.

3. Méthode selon la revendication 1, **caractérisée en ce que** lesdits moyens de coupe pour réaliser un ruban de matière pour ladite feuille inférieure (4) comprennent au moins deux lames placées de part et d'autre dudit calibreur.

4. Méthode selon la revendication 1, **caractérisée en ce que** lesdits moyens de coupe pour réaliser un ruban de matière pour ladite feuille supérieure (2) comprennent au moins deux lames placées de part et d'autre dudit calibreur.

5. Méthode selon la revendication 1, **caractérisée en ce que** lesdits moyens de perçage comprennent un cylindre à aiguilles (405) et le contre-rouleau correspondant.

6. Méthode selon la revendication 1, **caractérisée en ce que** lesdits moyens d'étalement de la colle (403) comprennent un dispositif destiné à l'étalement de la colle fondue selon une disposition en forme de toile d'araignée.

7. Méthode selon la revendication 1**, caractérisée en ce que** lesdits moyens d'accouplement (404) comprennent au moins deux cylindres de calandrage.

8. Méthode selon la revendication 1, **caractérisée en ce que** lesdits moyens d'emboutissage comprennent un moule supérieur comprenant une pluralité d'empreintes et un contre-moule inférieur correspondant.

9. Méthode selon la revendication 1, **caractérisée en ce que** ledit ruban de matière pour ladite feuille supérieure (2) est déroulé de ladite bobine circulaire (406) et fourni en alimentation auxdits moyens de perçage à travers un ensemble de rouleaux.

10. Méthode selon la revendication 1, **caractérisée en ce que** ledit ruban de matière pour ladite feuille inférieure (4) est déroulé de ladite bobine circulaire (407) et fourni en alimentation auxdits moyens d'étalement de la colle (403) à travers un système de rouleaux.

11. Méthode selon la revendication 1, **caractérisée en ce que** ledit ruban de matière pour ladite feuille supérieure (2) est alimenté par lesdits moyens de perçage (405) auxdits moyens d'accouplement (404) à travers un système à rouleaux.

12. Méthode selon la revendication 1, **caractérisée en ce que** ledit ruban de matière pour ladite feuille inférieure (4) est alimenté par lesdits moyens d'étalement de la colle (403) auxdits moyens d'accouplement (404) à travers un système à rouleaux.

13. Méthode selon la revendication 1, **caractérisée en ce que** ledit ruban de matière pour ladite feuille à double couche (10) est fourni en alimentation par lesdits moyens d'accouplement (404) auxdits moyens de formage à chaud à travers un système à rouleaux.

14. Méthode selon la revendication 1, **caractérisée en ce** ladite phase de formage à chaud comprend les étapes suivantes:
- chauffage de ladite feuille à double couche (10);
- insertion de ladite feuille à double couche (10) chauffée dans le moule supérieur et fermeture du contre-moule inférieur correspondant;
- création de vide à l'intérieur dudit moule supérieur fermé par ledit contre-moule inférieur;
- ouverture dudit moule supérieur et extraction du conteneur (1).
